# EUROPÄISCHE PATENTSCHRIFT

(11) **EP 4 542 070 B1**
(45) Veröffentlichungstag und Bekanntmachung des Hinweises auf die Patenterteilung: **13.05.2026**
(21) Anmeldenummer: 24202460.2
(22) Anmeldetag: 25.09.2024
(51) Int. Cl.: F16D 1/112, F16D 1/12, F16D 1/10

(54) **KUPPLUNGSVORRICHTUNG FÜR EINE ZELLENRADSCHLEUSE UND ZELLENRADSCHLEUSE**
COUPLING DEVICE FOR A CELLULAR WHEEL SLUICE AND CELLULAR WHEEL SLUICE
DISPOSITIF D'ACCOUPLEMENT POUR VANNE À ROUE CELLULAIRE ET VANNE À ROUE CELLULAIRE

(30) Priorität: 17.10.2023 DE 102023210139
(43) Veröffentlichungstag der Anmeldung: 23.04.2025
(73) Patentinhaber: Coperion GmbH, 70469 Stuttgart (DE)
(72) Erfinder: Obergfell, Dietmar, 88213 Ravensburg (DE); Weiler, Robin, 88213 Ravensburg (DE); Zinser, Bruno, 88289 Waldburg (DE); Schorer, Matthias, 88279 Amtzell (DE); Langenberger, Max, 88348 Kleintissen (DE)
(74) Vertreter: Rau, Schneck & Hübner Patentanwälte Rechtsanwälte PartGmbB

(56) Entgegenhaltungen:
- EP-A2- 1 820 987
- DE-A1- 102011 107 145
- DE-A1- 4 038 245
- GB-A- 2 529 663
- US-A- 4 473 317
- US-A- 4 810 126

## Beschreibung

Die Erfindung betrifft eine Kupplungsvorrichtung für eine Zellenradschleuse sowie eine Zellenradschleuse mit einer derartigen Kupplungsvorrichtung.

DE 20 2006 002 550 U1 offenbart eine Zellenradschleuse mit einer Drehmoment-Steck-Kupplung, die ein axiales Einstecken eines Steckzapfens in eine korrespondierende Aufnahme ermöglicht für eine Drehmomentübertragung um eine Drehachse des Zellenrads. Das axiale Einstecken ist möglich, wenn die unrunden Konturen von Steckzapfen und Aufnahme korrespondieren. Die Drehmoment-Steck-Kupplung ist drehpositionsabhängig, so dass im Regelfall das Zellenrad um die Drehachse gedreht werden muss, bevor es durch eine Axialbewegung gekuppelt werden kann. Eine entsprechende Drehmoment-Steck-Kupplung ist auch aus EP 1 820 987 A2 bekannt.

DE 40 38 245 A1 offenbart eine Kupplung für eine trennbare Antriebsverbindung zwischen einer Antriebswelle und einer Zellenradwelle einer Zellenradschleuse.

DE 10 2011 107 145 A1 offenbart eine schaltbare Kupplungseinrichtung für eine Pumpe.

GB 2 529 663 A und US 4,810,126 offenbaren jeweils eine federbelastete Kupplungseinrichtung.

Der Erfindung liegt die Aufgabe zugrunde, die Kupplung von Zellenrad und Gehäuse zu verbessern, insbesondere zu vereinfachen, so dass die Kupplung insbesondere unabhängig von der Drehposition des Zellenrades durchgeführt werden kann.

Diese Aufgabe ist durch eine Kupplungsvorrichtung mit den in Anspruch 1 angegebenen Merkmalen und durch eine Zellenradschleuse mit den in Anspruch 9 angegebenen Merkmalen gelöst.

Erfindungsgemäß wurde erkannt, dass eine drehpositionsunabhängige Kupplung einer Zellenradwelle mit einem drehantreibbaren Antriebselement durch ein separates Kupplungselement ermöglicht wird. Das Kupplungselement ist bezüglich einer Drehachse des Antriebselements axial verlagerbar. Das Kupplungselement ist zwischen einer Kupplungsposition und einer Entkupplungsposition axial verlagerbar. In der Kupplungsposition sind das Antriebselement und die Zellenradwelle drehmomentübertragend bezüglich der Drehachse miteinander verbunden. In der Entkupplungsposition sind das Antriebselement und die Zellenradwelle bezüglich der Drehmomentübertragung entkuppelt. In der Entkupplungsposition erfolgt keine Drehmomentübertragung zwischen dem Antriebselement und der Zellenradwelle.

Die Zellenradwelle weist insbesondere eine Längsachse auf, die insbesondere koaxial zur Drehachse des Antriebselements angeordnet ist.

Das Antriebselement ist insbesondere hülsenartig ausgeführt.

Mittels eines Federelements ist das Kupplungselement an dem Antriebselement oder an der Zellenradwelle axial bezüglich der Drehachse vorgespannt angeordnet. Das Federelement übt auf das Kupplungselement eine Federkraft aus, die entlang der Drehachse wirkt. Mittels des Federelements wird das Kupplungselement von dem Antriebselement zu der Zellenradwelle oder in umgekehrter Richtung gedrückt. Das Federelement ist insbesondere eine Druckfeder, insbesondere eine Schraubendruckfeder.

Das Antriebselement und die Zellenradwelle sind Komponenten, die mittels der Kupplungsvorrichtung miteinander kuppelbar bzw. entkuppelbar sind. Wesentlich ist, dass das Kupplungselement an der einen Komponente, insbesondere lösbar, befestigt ist und mittels des Federelements eine Federkraft auf das Kupplungselement ausgeübt wird, die das Kupplungselement in Richtung der anderen Komponente verlagert. Für die Ausgestaltung der Kupplungsvorrichtung und insbesondere deren Funktion ist es unerheblich, ob das Kupplungselement an der einen bzw. der anderen Komponente befestigt ist.

Insbesondere ist die Kupplungsvorrichtung, sind insbesondere jeweils das Antriebselement, die Zellenradwelle und das Kupplungselement, rotationssymmetrisch bezüglich der Drehachse ausgeführt. In der Kupplungsposition ist eine Drehmomentübertragung in einer Ebene senkrecht zur Drehachse im Uhrzeigersinn und im Gegenuhrzeigersinn möglich.

Wesentlich ist, dass das Kupplungselement an einer der zu kuppelnden Komponenten, also an dem Antriebselement oder an der Zellenradwelle, axial geführt verlagerbar ist und außerdem mit der jeweils anderen Komponente, also mit der Zellenradwelle oder mit dem Antriebselement, in Umfangsrichtung verdrehsicher kuppelbar ist.

Das Kupplungselement weist einen Kupplungsabschnitt auf, mittels dem das Kupplungselement mit der Zellenradwelle oder mit dem Antriebselement in der Kupplungsposition bezüglich der Drehachse verdrehsicher gekuppelt ist. Verdrehsicher bedeutet, dass ein Drehmoment bezüglich der Drehachse von dem Antriebselement mittels des Kupplungselements auf die Zellenradwelle übertragbar ist. Insbesondere korrespondiert das Kupplungselement im Bereich des Kupplungsabschnitts mit dem zu kuppelnden Element, also mit der Zellenradwelle oder mit dem Antriebselement. Dabei kann der Kupplungsabschnitt derart ausgeführt sein, dass in Umfangsrichtung zwischen dem Kupplungselement und der Zellenradwelle oder dem Antriebselement ein Spiel vorhanden ist.

Wenn die Zellenradwelle und das Antriebselement bezüglich ihrer Drehposition derart zueinander ausgerichtet sind, dass der Kupplungsabschnitt korrespondierend zu der Zellenradwelle oder dem Antriebselement angeordnet ist, erfolgt das Kuppeln direkt durch axiales Aufschieben. Diese Drehpositionierung von Zellenradwelle zu Antriebselement ist aber eher unwahrscheinlich, so dass der genannte Fall vergleichsweise selten eintritt.

In dem weitaus häufigeren Fall, dass der Kupplungsabschnitt nicht mit der Zellenradwelle oder mit dem Antriebselement korrespondiert, insbesondere nicht fluchtet, wird beim axialen Aufschieben von Zellenradwelle und Antriebselement das Kupplungselement entgegen von dem Federelement verursachten Federkraft an dem Antriebselement oder an der Zellenradwelle, an dem das Kupplungselement geführt verlagerbar angeordnet ist, eingeschoben. Das Kupplungselement wird insbesondere in eine dafür vorgesehene Ausnehmung an dem Antriebselement oder an der Zellenradwelle eingedrückt, da aufgrund der jeweiligen Drehposition eine Kupplung mit der jeweils anderen Komponente nicht möglich ist.

Die Zellenradwelle kann insbesondere in einen Gehäuseseitendeckel des Gehäuses der Zellenradschleuse eingesteckt werden. Die Montage der Zellenradschleuse ist unabhängig von der Drehposition des Zellenrads relativ zu dem Antriebselement möglich. Durch ein Betätigen des Antriebselements um die Drehachse wird die Drehposition zwischen der Zellenradwelle und dem Antriebselement verändert. Insbesondere wird das Kupplungselement mit einer der Komponenten unmittelbar gedreht. Sobald das Kupplungselement, insbesondere dessen Kupplungsabschnitt, sich in einer Drehposition befindet, in der das Kupplungselement mit der Zellenradwelle oder mit dem Antriebselement korrespondiert, wird das Kupplungselement in Folge der Federkraft axial von der ersten Komponente, also von dem Antriebselement oder der Zellenradwelle, zu der zweiten Komponente, also zu der Zellenradwelle oder dem Antriebselement, verlagert.

In der Entkupplungsposition, in der die Zellenradwelle von einem Gehäuseseitendeckel beabstandet angeordnet sein kann, ist die Zellenradwelle insbesondere an dem anderen Gehäuseseitendeckel gehalten. Insbesondere kann die Zellenradwelle mit dem anderen Gehäuseseitendeckel mit einer nicht näher dargestellten Auszugsvorrichtung aus dem Gehäuse der Zellenradschleuse herausgezogen werden. Das an dem anderen Gehäuseseitendeckel gehaltene Zellenrad ist insbesondere gegenüber diesem Gehäuseseitendeckel bezüglich der Drehachse drehbar, insbesondere manuell.

Die axiale Verlagerung erfolgt passiv von der Entkupplungsposition in die Kupplungsposition, sobald die erforderliche Drehpositionierung erreicht ist. Die Drehmomentkupplung erfolgt also insbesondere verzögert, nämlich wenn die Zellenradwelle bereits auf das Antriebselement aufgesteckt, also axial miteinander gekuppelt ist.

Wesentlich ist, dass das Kupplungselement formschlüssig an dem Antriebselement oder an der Zellenradwelle axial geführt verlagerbar ist, und dass das Federelement ein automatisches Axialverlagern aus der Entkupplungsposition in die Kupplungsposition ermöglicht.

Die erfindungsgemäße Kupplungsvorrichtung ermöglicht insbesondere ein automatisiertes und insbesondere vollautomatisches Kuppeln der Zellenradwelle mit dem Antriebselement. Die Notwendigkeit einer manuellen Interaktion ist reduziert und insbesondere vermieden.

Die Kupplungsvorrichtung eignet sich insbesondere bei einer Zellenradschleuse, die für Schüttgut mit erhöhten Reinheitsanforderungen eingesetzt wird, wie beispielsweise Schüttgut, insbesondere Pulver, für die Verwendung in oder für die Herstellung von Nahrungsmitteln, insbesondere Milchpulver, Säuglingsnahrung und/oder Tierfutter, oder Pharmazieprodukten, insbesondere Medikamenten.

Eine Verlagerungskontur des Kupplungselements gemäß Anspruch 2 gewährleistet eine vorteilhafte, insbesondere stabile und störungsfreie, Axialverlagerung des Kupplungselements an der ersten Komponente, also an dem Antriebselement oder an der Zellenradwelle, die jeweils einen korrespondierenden Führungsabschnitt aufweisen. Der Führungsabschnitt ist in einer senkrecht zur Drehachse orientierten Ebene mit einer unrunden Führungskontur ausgeführt. Die axiale Verlagerung des Kupplungselements ist insbesondere verdrehsicher bezüglich der Drehachse, insbesondere spielfrei und insbesondere passgenau möglich. Die Führungskontur kann als Innenkontur oder als Außenkontur ausgeführt sein. Die konkrete geometrische Ausgestaltung der Führungskontur kann in verschiedener Weise erfolgen. Vorteilhaft ist es, wenn die Geometrie mehrere konvexe Umfangsabschnitte aufweist, die, insbesondere in gleichen, Winkelabständen zueinander angeordnet sind. Die Führungskontur von Antriebselement oder Zellenradwelle und die Verlagerungskontur des Kupplungselements können insbesondere entsprechend der DE 20 2006 002 550 U1 ausgeführt sein.

Vorteilhaft ist es, wenn die Führungskontur derart ausgeführt ist, dass die für die Drehmomentübertragung genutzte Fläche ausreichend groß ist, damit eine hohe Kraftübertragung gewährleistet ist. Auf die Wirkflächen der Kupplungsgeometrie findet eine Flächenpressung statt. Die von einer Belastung verursachte Kraft wirkt auf die Wirkfläche, woraus eine mechanische Spannung resultiert. Damit das Material, das für die Herstellung der Komponenten der Kupplungsvorrichtung nicht versagt, insbesondere nicht plastifiziert, muss die wirkende Spannung kleiner sein als die Belastbarkeit des Materials, insbesondere dessen Streckgrenze. Die wirkende Spannung ist umso kleiner, je größer die beanspruchte Fläche ist. Insofern ist eine für die Drehmomentübertragung möglichst große Fläche anzustreben. Vorteilhaft ist auch ein Mindestradius zwischen konkaven und konvexen Umfangsabschnitten der Führungskontur bzw. der Verlagerungskontur. Die Herstellung der Geometrien, insbesondere in einem Härteverfahren, ist dadurch sichergestellt. Es ist insbesondere gewährleistet, dass sich die jeweilige Kontur für ein Wärmebehandlungsverfahren eignet.

Eine Kupplungsvorrichtung gemäß Anspruch 3 vereinfacht das drehpositionsunabhängige Kuppeln. Dadurch, dass an dem Antriebselement oder an der Zellenradwelle eine Axialausnehmung derart vorhanden ist, dass das Kupplungselement in der Entkupplungsposition vollständig darin anordenbar ist, ist sichergestellt, dass das Zellenrad mit der Zellenradwelle axial auf das Antriebselement vollständig aufgeschoben werden kann. Das Zellenrad kann in das Gehäuse eingebaut werden, bevor die für die Drehmomentkupplung erforderliche Drehposition erreicht ist. Die Zellenradschleuse kann montiert werden unabhängig von der Drehposition der Zellenradwelle. Insbesondere ist das Montieren der Zellenradschleuse durch das Kupplungselement nicht gehindert oder gestört.

Die Ausgestaltung der Kupplungsvorrichtung gemäß Anspruch 4 ermöglicht eine besonders kleinbauende und kompakte Ausgestaltung. Insbesondere weist die Axialausnehmung die Führungskontur vollständig auf.

Die Ausgestaltung der Kupplungsvorrichtung gemäß Anspruch 5 vereinfacht die passive Kupplungsfunktion, insbesondere das selbsttätige Verlagern des Kupplungselements in die Kupplungsposition. Das Kupplungselement kann entgegen der wirkenden Federkraft in die Axialausnehmung eingeschoben werden.

Eine Kupplungsvorrichtung gemäß Anspruch 6 ermöglicht eine vorteilhafte Drehmomentübertragung von dem Kupplungselement auf die zweite Komponente, also auf die Zellenradwelle oder das Antriebselement. Dabei weist der Kupplungsabschnitt eine unrunde Kupplungskontur auf, die als Innenkontur oder Außenkontur ausgeführt sein kann. Insbesondere ist die Ausgestaltung der Kupplungskontur analog und insbesondere identisch zu der Verlagerungskontur ausgeführt.

Es ist insbesondere denkbar, dass das Kupplungselement in axialer Richtung eine einzige, axial durchgängige Kontur aufweist. In diesem Fall sind Verlagerungskontur und Kupplungskontur identisch. Es ist aber auch denkbar, dass sich die Kupplungskontur von der Verlagerungskontur unterscheidet. Insbesondere kann die Kupplungskontur als Außenkontur und die Verlagerungskontur als Innenkontur ausgeführt sein oder umgekehrt. Insbesondere weist die jeweils zweite Komponente, also die Zellenradwelle oder das Antriebselement, eine Kupplungsgegenkontur auf, die zu der Kupplungskontur korrespondierend ausgeführt ist, aber nicht identisch sein muss. Es ist insbesondere möglich, dass ein Spiel in Umfangsrichtung zwischen der Kupplungskontur und der Kupplungsgegenkontur vorliegt. Wesentlich ist, dass eine Drehmomentübertragung durch Kupplungskontur und Kupplungsgegenkontur sichergestellt ist.

Ein Rückhalteelement gemäß Anspruch 7 stellt sicher, dass das Kupplungselement an der ersten Komponente, also an dem Antriebselement oder an der Zellenradwelle, trotz der Federkraftbeaufschlagung zuverlässig angeordnet ist. Das Kupplungselement ist mittels des Rückhalteelements insbesondere unverlierbar an der ersten Komponente gehalten. Eine automatisierte Betätigung der Kupplungsvorrichtung ist dadurch vereinfacht. Die Kupplungsvorrichtung ist fehlersicher in der Anwendung.

Die Ausgestaltung des Rückhalteelements gemäß Anspruch 8 ist unkompliziert, aber effizient. Das Rückhalteelement ist unmittelbar an der ersten Komponente, also an dem Antriebselement oder an der Zellenradwelle, gehalten. Die Befestigung des Rückhalteelements ist lösbar. Insbesondere ist das Rückhalteelement als Passschraube ausgeführt, wodurch die Axialverlagerung des Kupplungselements zusätzlich verbessert, insbesondere stabilisiert ist. Insbesondere ist eine koaxiale Anordnung des Rückhalteelements und des Federelements unkompliziert möglich. Das Federelement ist insbesondere als Schraubendruckfeder um die Passschraube herum angeordnet. Eine Zellenradschleuse gemäß Anspruch 9 weist im Wesentlichen die Vorteile der Kupplungsvorrichtung auf, worauf hiermit verwiesen wird.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung einer Zellenradschleuse im Halbschnitt mit Gehäuse, Zellenrad, Drehantrieb und Kupplungsvorrichtung,
- Fig. 2: eine vergrößerte Längsschnittdarstellung der Kupplungsvorrichtung gemäß Fig. 1,
- Fig. 3: eine Querschnittdarstellung gemäß Schnittlinie III-III in Fig. 2,
- Fig. 4: eine Schnittdarstellung gemäß Schnittlinie IV-IV in Fig. 2,
- Fig. 5, 6: perspektivische, teilgeschnittene Darstellungen der Kupplungsvorrichtung in gekuppeltem und in entkuppeltem Zustand,
- Fig. 7: eine schematisierte Perspektivansichtdes Zellenrads gemäß Fig. 1,
- Fig. 8: eine vergrößerte perspektivische Darstellung des Kupplungselements gemäß Fig. **1****,**
- Fig. 9: eine perspektivische Darstellung des Antriebselements der Kupplungsvorrichtung,
- Fig. 10: eine perspektivische, teilgeschnittene Explosionsdarstellung einer Kupplungsvorrichtung gemäß einem zweiten Ausführungsbeispiel,
- Fig. **11**: eine Darstellung der Kupplungsvorrichtung gemäß Fig. 10 als Längsschnitt in gekuppeltem Zustand,
- Fig. 12: eine Fig. **11** entsprechende Darstellung im entkuppelten Zustand,
- Fig. 13: eine Fig. 9 entsprechende Darstellung des Antriebselements gemäß dem zweiten Ausführungsbeispiel,
- Fig. 14: eine Fig. 8 entsprechende vergrößerte Darstellung des Kupplungselements gemäß dem zweiten Ausführungsbeispiel,
- Fig. 15: eine Fig. 7 entsprechende Darstellung des Zellenrads gemäß dem zweiten Ausführungsbeispiel,
- Fig. 16: eine Fig. 10 entsprechende Darstellung einer Kupplungsvorrichtung gemäß einem dritten Ausführungsbeispiel,
- Fig. 17, 18: Längsschnittdarstellungen der Kupplungsvorrichtung gemäß Fig. 16 im gekuppelten und im entkuppelten Zustand,
- Fig. 19, 20: Fig. 8 und 9 entsprechende Darstellungen des Kupplungselements und des Antriebselements gemäß dem dritten Ausführungsbeispiel.

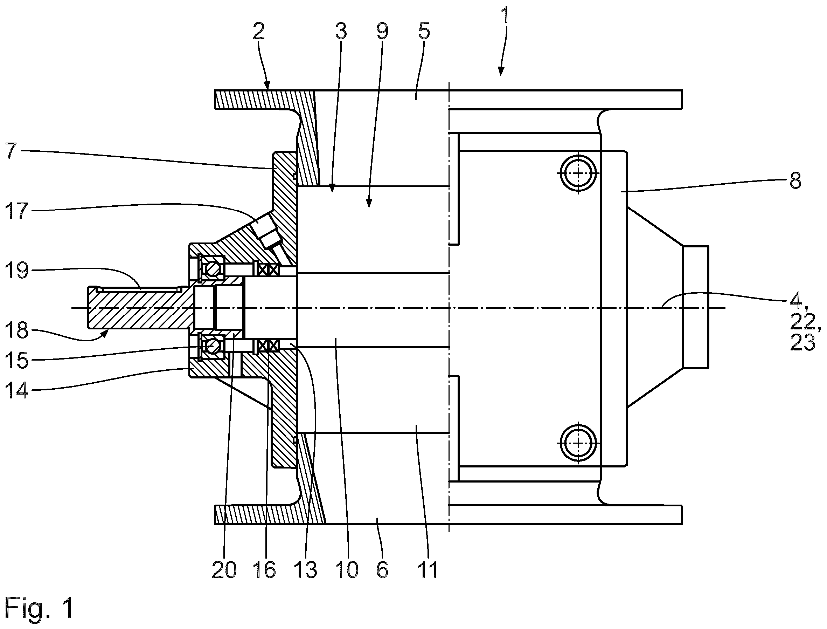

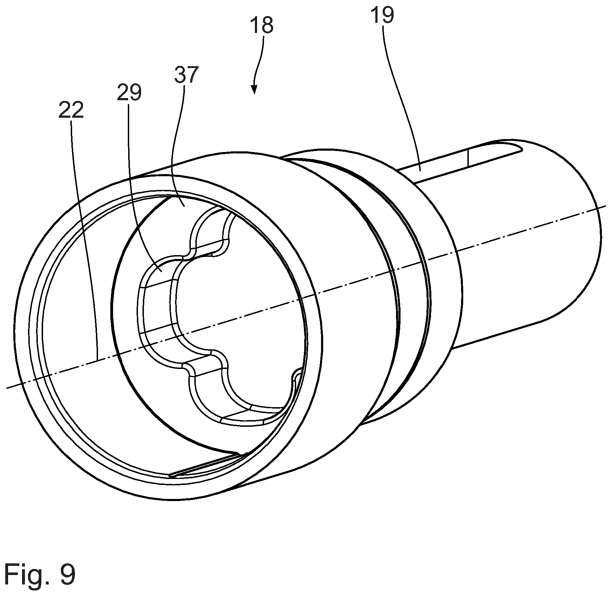

Eine in Fig. 1 bis 9 als Ganzes mit 1 gekennzeichnete Zellenradschleuse dient zur Förderung von Schüttgut, insbesondere aus dem Bereich der Nahrungsmittel- und/oder der Arzneimittelproduktion. Die Zellenradschleuse erfüllt höchste Reinheitsanforderungen und ist insbesondere unkompliziert von einem geöffneten Zustand beispielsweise nach einer Reinigung oder Wartung wieder in den geschlossenen Zustand für den Weiterbetrieb überführbar. Es ist insbesondere möglich, die Zellenradschleuse 1 automatisiert und insbesondere vollautomatisch zu kuppeln.

Die Zellenradschleuse 1 weist ein Gehäuse 2 mit einem im Wesentlichen zylindrischen Innenraum 3 auf. Der Innenraum 3 weist eine horizontale Mittelachse 4 auf. In den Innenraum 3 mündet von oben ein Einlassstutzen 5 ein und mündet unten ein Auslassstutzen 6 aus. Der Innenraum 3 des Gehäuses 2 ist an seinen Stirnseiten offen ausgebildet. Diese Stirnseiten werden durch Deckel 7, 8 abgedeckt, die mittels Befestigungselementen, beispielsweise Schrauben, am Gehäuse 2 befestigt sind.

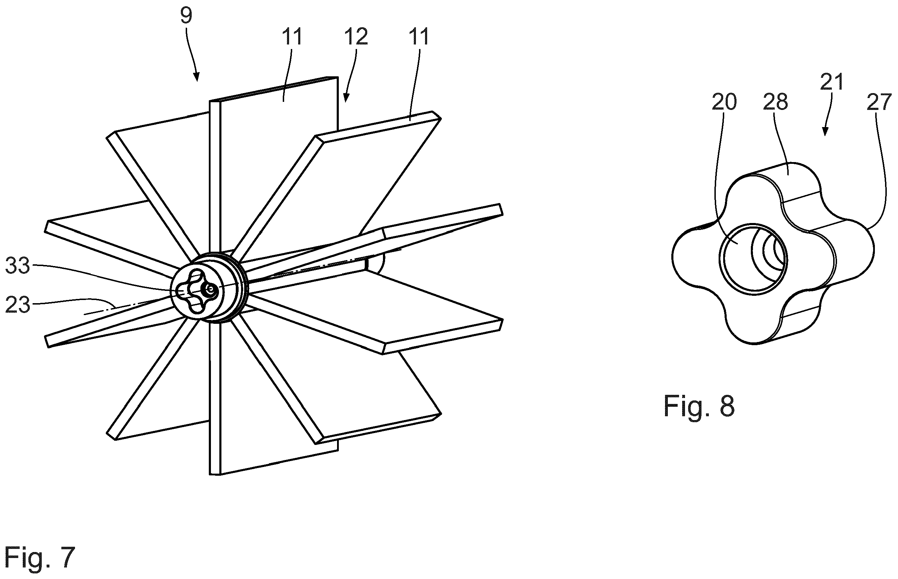

Im Innenraum 3 ist konzentrisch zur Mittelachse 4 ein Zellenrad 9 angeordnet, an dessen Welle 10 verteilt radial zur Mittelachse 4 von ihr abstehende, durch nahezu rechteckige Platten gebildete Flügel 11 angebracht sind. Die Welle 10 wird auch als Zellenradwelle bezeichnet. Die Flügel **11** sind in üblicher Weise in gleichen Winkelabständen über den Umfang der Welle 10 verteilt an dieser befestigt, wie insbesondere aus Fig. 7 hervorgeht. Jeweils benachbarte Flügel **11** begrenzen zwischen sich eine Zelle 12.

Die Welle 10 durchsetzt in den Deckeln 7, 8 ausgebildete Lageröffnungen 13 und ist in am jeweiligen Deckel 7 bzw. 8 angebrachten Lagergehäusen 14 in Wälzlagern 15 gelagert. Außerdem sind zwischen dem jeweiligen Wälzlager 15 und dem Innenraum 3 Dichtungen 16 angeordnet, die zwischen dem jeweiligen Lagergehäuse 14 und der Welle 10 wirken. Sie sollen einen Austritt des durch die Zellenradschleuse 1 geförderten Produkts verhindern. Zwischen den Dichtungen 16 und dem Innenraum 3 mündet noch ein Spülluftanschluss 17 in die jeweilige Lageröffnung 13, mittels dessen aus dem Innenraum 3 austretendes Produkt in den Innenraum 3 zurückgeblasen werden kann.

Der Drehantrieb des Zellenrades 9 erfolgt über einen Antriebszapfen 18, der zur drehfesten Anbringung eines Zahnrades, des Kettenrades einer Rollenkette oder dergleichen eine Nut 19 aufweist und als Drehantriebseinrichtung dient. Der Antriebszapfen 18 wird auch als Antriebselement bezeichnet. Der Antriebszapfen 18 weist einen im Lagergehäuse 14 des Deckels 7 befindlichen hohlen ersten Kupplungsabschnitt 20 auf, der über das Wälzlager 15 in Lagergehäuse 14 radial abgestützt und axial festgelegt, aber frei drehbar gelagert ist.

Das Antriebselement 18 ist um eine Drehachse 22 drehantreibbar. Die Drehachse 22 ist koaxial zur Mittellänge 4 orientiert. Die Zellenradwelle 10 weist eine Längsachse 23 auf. In dem eingebauten Zustand gemäß Fig. 1 ist die Zellenradwelle 10 mit der Längsachse 23 koaxial zur Mittelachse 4 und koaxial zur Drehachse 22 in dem Gehäuse 2 drehbar angeordnet.

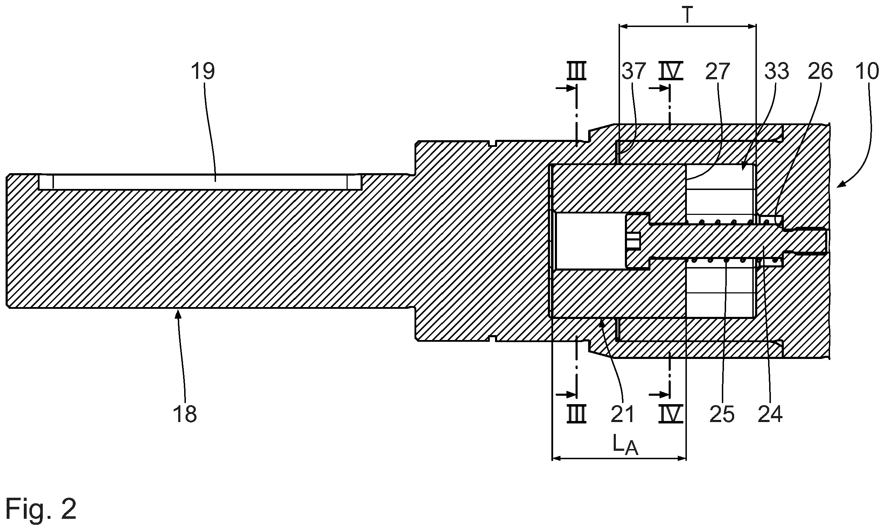

An der Welle 10, die in Fig. 2 bis 6 lediglich teilweise dargestellt ist, ist ein Kupplungselement 21 angeordnet.

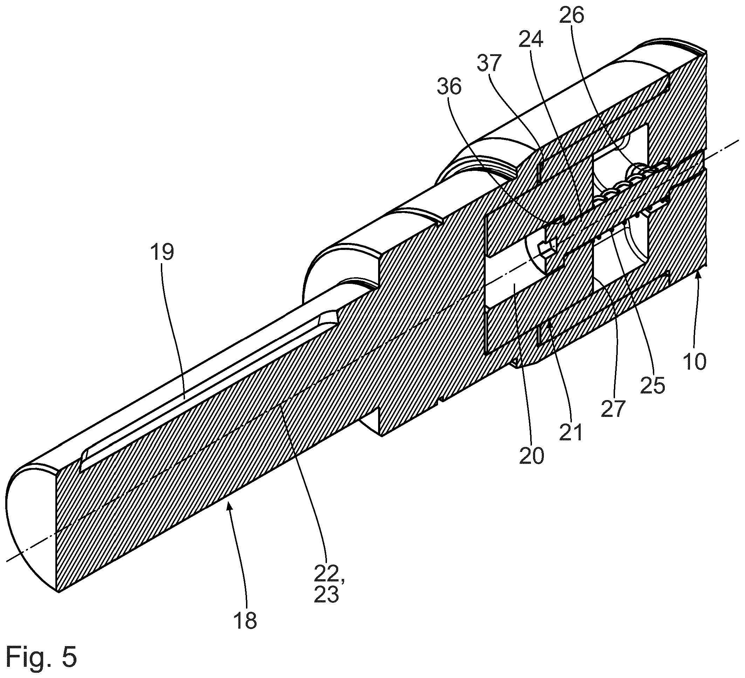

Das Kupplungselement 21 ist bezüglich der Drehachse 22 an der Zellenradwelle 10 geführt verlagerbar angeordnet. Gemäß Fig. 5 ist das Kupplungselement 21 in einer Kupplungsposition angeordnet, in der das Antriebselement 18 und die Zellenradwelle 10 drehmomentübertragend bezüglich der Drehachse 22 miteinander verbunden sind. Das bedeutet, dass eine Antriebsdrehbewegung von dem Antriebselement 18 über das Kupplungselement 21 auf die Zellenradwelle 10 übertragen wird.

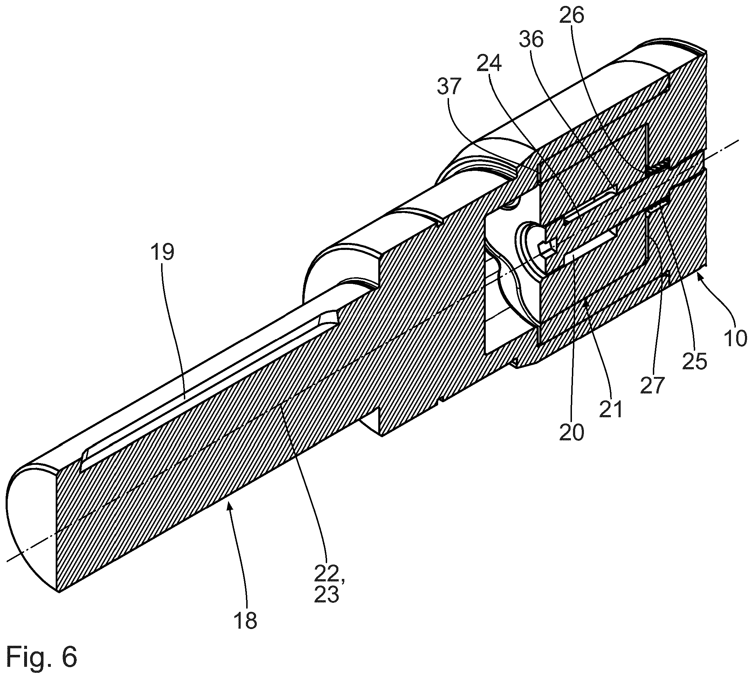

In der in Fig. 6 gezeigten Entkupplungsposition sind das Antriebselement 18 und die Zellenradwelle 10 bereits aneinander gefahren, berühren sich stirnseitig, sind jedoch bezüglich einer Drehmomentübertragung um die Drehachse 22 entkuppelt. In dieser Position erfolgt keine Drehmomentübertragung von dem Antriebszapfen 18 auf die Zellenradwelle 10.

Das Kupplungselement 21 ist an der Zellenradwelle 10 mittels eines Rückhaltelements 24 in Form einer Passschraube unverlierbar, aber lösbar gehalten. Die Passschraube ist mit einem Gewindezapfen in ein korrespondierendes Innengewinde an der Zellenradwelle 10 eingeschraubt. Die Passschraube weist einen Pass-Außendurchmesser auf, der mit einem Pass-Innendurchmesser des Kupplungselements 21 korrespondiert. Das Kupplungselement 21 ist entlang des Schaftabschnitts der Passschraube 24 koaxial zur Drehachse 22 geführt verlagerbar. Die Axialverlagerung des Kupplungselements 21 entlang der Passschraube 24 ist stabil und fehlerunanfällig. Der Schraubenkopf der Passschraube 24 hintergreift eine innere Anlageschulter 36 des Kupplungselements 21, so dass ein unbeabsichtigtes Lösen des Kupplungselements 21 von der Zellenradwelle 10 zuverlässig verhindert ist.

Dadurch, dass die Passschraube 24 in die Zellenradwelle 10 eingeschraubt ist, ist das Rückhalteelement 24 lösbar mit der Zellenradwelle 10 verbunden. Die Montage des Kupplungselements 21 an der Zellenradwelle 10 ist unkompliziert.

Das Kupplungselement 21 ist mittels eines Federelements 25 mit einer Federkraft beaufschlagt. Das Federelement 25 ist als Druckfeder, insbesondere als Schraubendruckfeder, ausgeführt. Die Schraubendruckfeder ist an eine Axialanlagefläche 26 der Zellenradwelle 10 und an einer äußeren Stirnseite 27 des Kupplungselements 21 axial abgestützt. Das Federelement 25 ist insbesondere derart ausgelegt, dass eine axiale Druckkraft auf das Kupplungselement 21 wirkt. Die Druckkraft ist von der Zellenradwelle 10 weg und zu dem Antriebselement 18 hin gerichtet. Das bedeutet, dass eine axiale Vorspannkraft auf das Kupplungselement 21 derart wirkt, dass das Kupplungselement 21 zu dem Antriebselement 18 hin gerichtet ist. Insbesondere ist das Federelement 25 derart dimensioniert, dass auch in der Kupplungsposition gemäß Fig. 5 eine axiale Federkraft in Richtung des Antriebselements 18 auf das Kupplungselement 21 wirkt. Das Kupplungselement 21 ist zuverlässig in der Kupplungsposition mit dem Antriebselement 18 gekuppelt. Eine Axialverlagerung des Kupplungselements 21 ist durch Überwinden der Federkraft möglich.

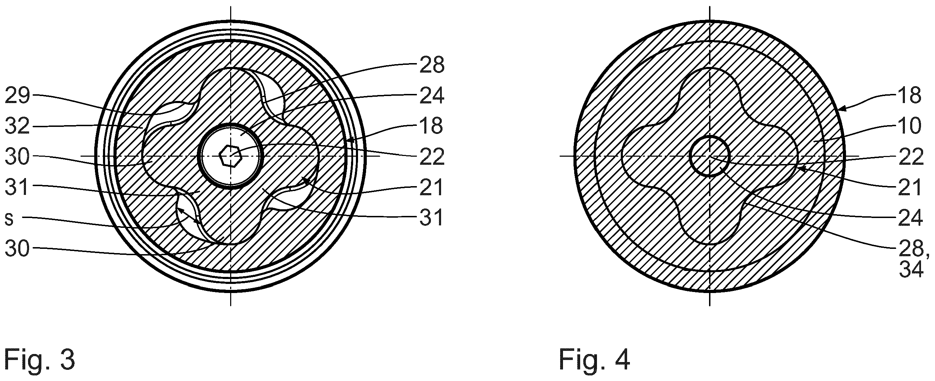

Für die Kupplung des Kupplungselements 21 mit dem Antriebselement 18 weist das Kupplungselement 21 einen Kupplungsabschnitt auf, der mit einem Kupplungsgegenabschnitt des Antriebselements 18 korrespondiert, wie dies insbesondere in Fig. 3 dargestellt ist. Der Kupplungsabschnitt des Kupplungselements 21 weist in einer senkrecht zur Drehachse 22 orientierten Ebene, die der Zeichenebene gemäß Fig. 3 entspricht, eine unrunde Kupplungskontur 28 auf, die mit einer Kupplungsgegenkontur 29 des Antriebselements 18 korrespondiert. Gemäß dem gezeigten Ausführungsbeispiel ist die Kupplungskontur 28 eine Außenkontur. Entsprechend ist die Kupplungsgegenkontur 29 eine Innenkontur. Die Kupplungskontur 28 entspricht im Wesentlichen einer Kreuzgeometrie oder einer Plusgeometrie. Die Kupplungskontur 28 weist vier konvexe teilzylindrische Umfangsabschnitte 30 auf, die durch jeweils vier konkave Umfangsabschnitte 31 miteinander verbunden sind. Der jeweilige Übergang zwischen konvexen Umfangsabschnitten 30 und konkaven Umfangsabschnitten 31 erfolgt jeweils stetig also ohne Knickstelle. Es versteht sich, dass die Kupplungskontur 28 auch in anderer Weise ausgeführt sein könnte und insbesondere mehr oder weniger als vier Umfangsabschnitte 30, 31 aufweisen kann. Bezüglich konkreter Ausgestaltungen dieser Geometrie wird auf die DE 20 2006 002 550 U1 verwiesen.

Die Kupplungsgegenkontur 29 unterscheidet sich von der Kupplungskontur 28 insofern, als konkave Umfangsgegenabschnitte 32, die mit den konvexen Umfangsabschnitten 30 der Kupplungskontur 28 korrespondieren, eine Breite aufweist, die größer ist als eine Breite der konvexen Umfangsabschnitte 30. Daraus ergibt sich ein Spiel s in Umfangsrichtung bezüglich der Drehachse 22. Das Spiel s ermöglicht eine Drehbewegung des Kupplungselements 21 um die Drehachse 22 in dem Antriebselement 18. Das Spiel s beträgt höchstens 30°, insbesondere höchstens 20°, insbesondere höchstens 15° und insbesondere höchstens 10°, insbesondere aber mindestens 1°, insbesondere mindestens 2°und insbesondere 5°.

Die Zellenradwelle 10 weist eine Axialausnehmung 33 auf, in der das Kupplungselement 21 zumindest anteilig angeordnet ist. Die Axialausnehmung 33 ist sacklochartig ausgeführt und erstreckt sich von einer Stirnseite der Zellenradwelle 10 bis zu einer Tiefe T. Die Tiefe T ist mindestens so groß wie die axiale Länge L_{A} des Kupplungselements 21. Das Kupplungselement 21 ist insbesondere vollständig innerhalb der Axialausnehmung 33 anordenbar. Insbesondere ist das Kupplungselement 21 derart an der Zellenradwelle 10 anordenbar, dass das Kupplungselement 21 in axialer Richtung an der Zellenradwelle 10 nicht vorsteht. Das Einschieben des Kupplungselements 21 in die Axialausnehmung 33 erfolgt entgegen der Federkraft des Federelements 25. Das bedeutet, dass in diesem zusammengefahrenen Zustand der Kupplungsvorrichtung das Federelement 25 komprimiert ist und eine Federkraft auf das Kupplungselement 21 ausübt, die das Kupplungselement 21 aus der Axialausnehmung 33 herausdrückt. Das Kupplungselement 21 ist gegenüber einer Stirnfläche der Zellenradwelle 10 bündig und axial nach innen versetzt, also rückversetzt, angeordnet.

In der Axialausnehmung 33 ist ein Führungsabschnitt ausgebildet, der in einer senkrecht zur Drehachse 22 orientierten Ebene eine unrunde Führungskontur 34 aufweist. Die Führungskontur 34 erstreckt sich in der Axialausnehmung 33 über deren gesamte axiale Länge, also deren Tiefe T. Die Führungskontur 34 korrespondiert insbesondere zu der Kupplungskontur 28 des Kupplungselements 21. Insbesondere sind die Kupplungskontur 28 und die Führungskontur 34 in Umfangsrichtung spielfrei ausgeführt. Die Kupplungskontur 28 und die Führungskontur 34 ermöglichen eine stabile und kippfreie Axialverlagerung des Kupplungselements 21 in die Axialausnehmung 33. Das Kupplungselement 21 ist insbesondere verdrehsicher, insbesondere spielfrei und insbesondere passgenau in der Axialausnehmung 33 angeordnet.

Die mit der Führungskontur 34 korrespondierende Kupplungskontur wird auch als Verlagerungskontur bezeichnet. Gemäß dem gezeigten Ausführungsbeispiel des Kupplungselements 21 sind die Verlagerungskontur und die Kupplungskontur identisch ausgeführt. Die Herstellung des Kupplungselements 21 ist dadurch vereinfacht. Das Kupplungselement 21 ist besonders unkompliziert ausgeführt.

Nachfolgend wird das Kuppeln des Zellenrades 9 mit dem Antriebselement 18 beim Einführen des Zellenrades 9 in das Gehäuse 2 der Zellenradschleuse 1 näher erläutert.

Ausgehend von einem geöffneten Zustand der Zellenradschleuse **1,** wenn der Seitendeckel 8 von dem Gehäuse 2 entfernt und das Zellenrad 9 außerhalb des Innenraums 3 angeordnet ist, wird das Zellenrad 9 in den Innenraum 3 eingeführt und die Zellenradwelle 10 zu dem Antriebselement 18 bewegt. Da das dem Antriebselement 18 zugewandte stirnseitige Ende der Zellenradwelle 10 unbelastet ist, wird das Kupplungselement 21 an der Stirnseite der Zellenradwelle 10 in Folge der Federkraftbeaufschlagung durch das Federelement 25 herausgedrückt. Das bedeutet, dass das Kupplungselement 21 an der Stirnseite der Zellenradwelle 10 vorsteht.

Für den Fall, dass die Drehposition der Zellenradwelle 10 mit dem Kupplungselement 21 derart ausgeführt ist, dass das Kupplungselement 21 mit der Kupplungskontur 28 in die Kupplungsgegenkontur 29 eingeführt werden kann, wie dies in Fig. 3 dargestellt ist, erfolgt die axiale Steckkupplung unmittelbar. Die Kupplung der Zellenradwelle 10 mit dem Antriebselement 18 ist unmittelbar vollzogen.

In allen anderen Fällen, in welchen die Drehposition des Kupplungselements 21 so ausgeführt ist, dass Kupplungskontur 28 und Kupplungsgegenkontur 29 nicht miteinander korrespondieren, kommt das Kupplungselement 21 stirnseitig an einer Anlagefläche 37 des Antriebselements 18 zum Anliegen. Die Anlagefläche 37 ist im Wesentlichen ringförming ausgeführt mit einer unrunden Innenkontur. Bei einer weiteren Axialbewegung der Komponenten zueinander wird das Kupplungselement 21 entgegen der Federkraft des Federelements 25 in die Axialausnehmung 34 eingeschoben. Das bedeutet, dass ein axiales Aufstecken der Zellenradwelle 10 auf das Antriebselement 18 auch dann möglich ist, wenn die Drehposition der beiden Komponenten 10, 18 zueinander nicht korrespondiert. Das bedeutet, dass das axiale Aufstecken der Zellenradwelle 10 auf das Antriebselement 18 drehpositionsunabhängig möglich ist.

In diesem Fall erfolgt anschließend eine Drehbewegung des Antriebselements 18. Sobald die Drehbewegung soweit erfolgt ist, dass die Kupplungskontur 28 und die Kupplungsgegenkontur 29 korrespondieren, wird das Kupplungselement 21 infolge der vorgespannten Anordnung in der Axialausnehmung 34 wegen der Federkraft axial aus der Axialausnehmung 34 heraus bewegt und in die entsprechende Ausnehmung des Antriebselements 18 verlagert.

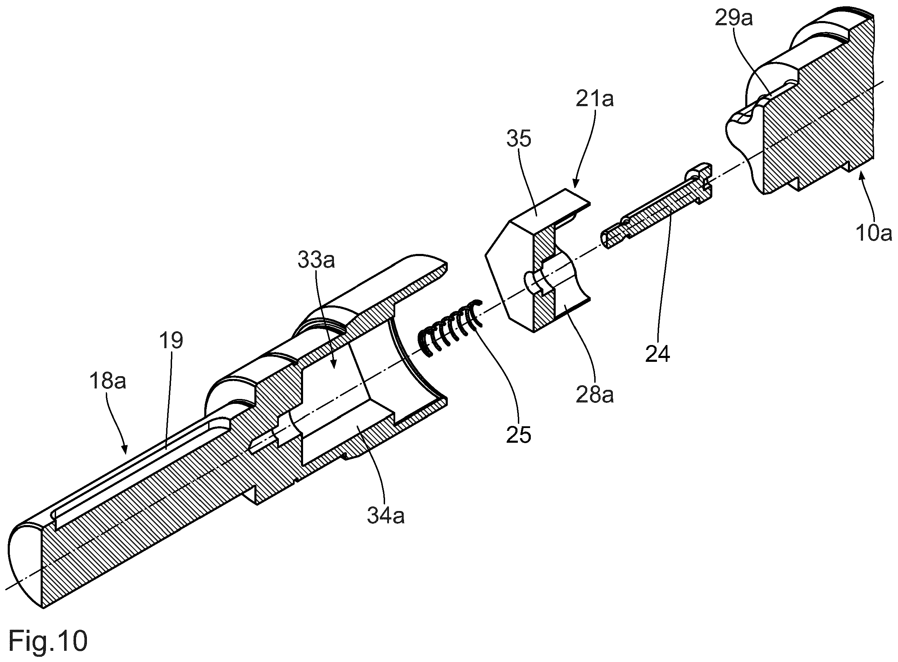

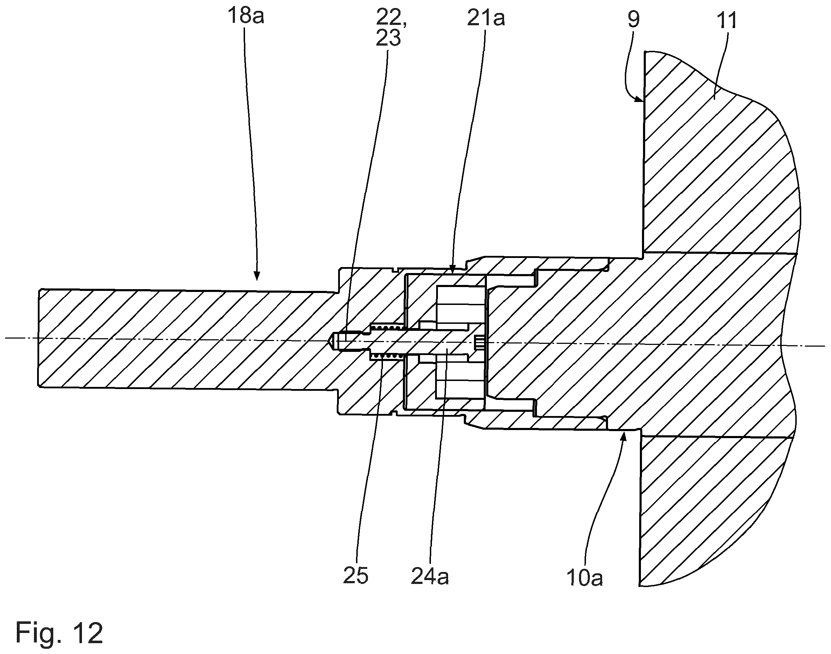

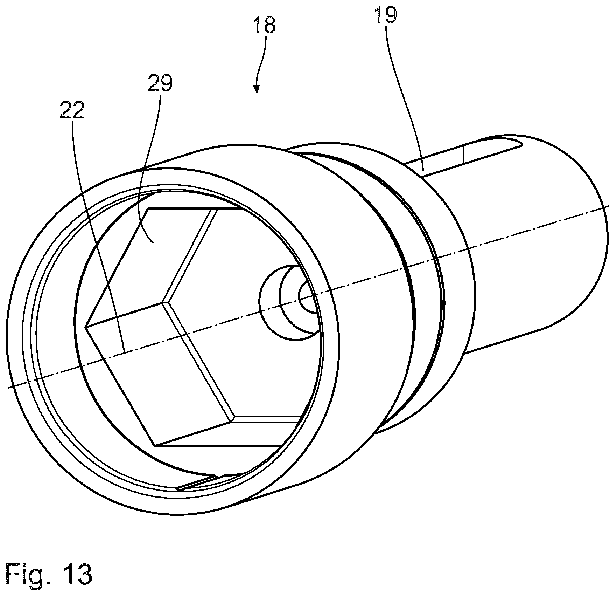

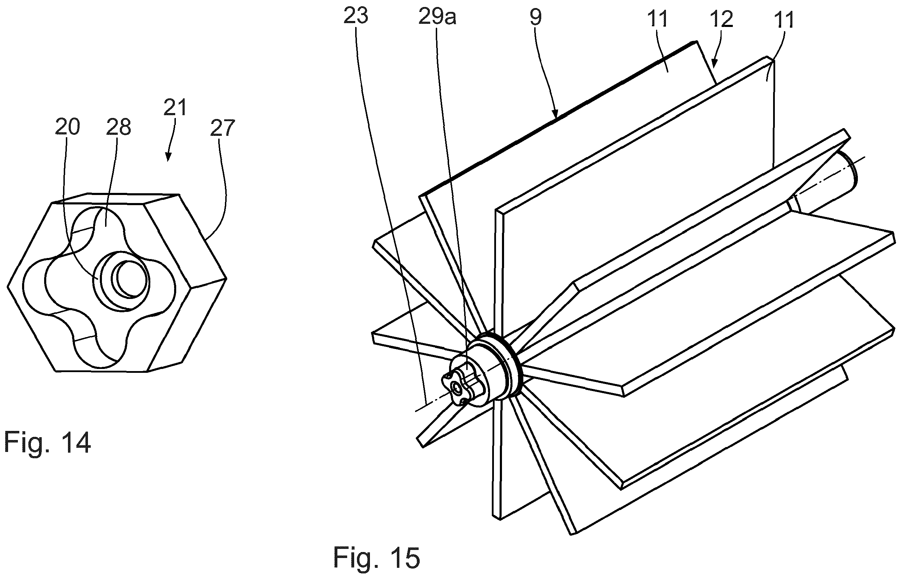

Im Folgenden wird unter Bezugnahme auf Fig. 10 bis 15 ein zweites Ausführungsbeispiel beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein wesentlicher Unterschied besteht darin, dass bei dem zweiten Ausführungsbeispiel das Kupplungselement 21a an dem Antriebselement 18a angeordnet und daran befestigt ist. Entsprechend ist die Passschraube als Rückhaltelement 24 mit dem Gewindeabschnitt in einer korrespondierenden Innengewindebohrung an dem Antriebselement 18a festgelegt.

Entsprechend ist die Druckfeder 25 zwischen dem Antriebselement 18a und dem Kupplungselement 21a angeordnet, so dass das Kupplungselement 21a von dem Antriebselement 18a weg, zu der Zellenradwelle 10 hin gedrückt wird.

Die Führungskontur 34a ist als Innen-Sechskantkontur ausgeführt. Die Führungskontur 34a ist in der Axialausnehmung 33a angeordnet, die in dem Antriebselement 18a ausgeführt ist. Entsprechend ist die Verlagerungskontur 35 des Kupplungselements 21a eine Außen-Sechskantkontur, die mit der Führungskontur 34a korrespondiert. Die Kupplungsgegenkontur 29a ist einteilig mit der Zellenradwelle 10a ausgebildet und stirnseitig in Form eines Steckzapfens an der Zellenradwelle 10a angeordnet. Die Kupplungsgegenkontur 29a ist erhaben ausgeführt mit einer unrunden Auenkontur. Die Geometrie dieses einteilig angeformten Zapfens entspricht im Wesentlichen der Geometrie des Kupplungselements 21 gemäß dem ersten Ausführungsbeispiels.

Die zu der Kupplungsgegenkontur 29a korrespondierende Kupplungskontur 28a ist als Innenkontur an dem Kupplungselement 21a ausgebildet. Entsprechend unterscheiden sich die Kupplungskontur 28a und die Verlagerungskontur 35 bei dem Kupplungselement 21a.

Das Kupplungselement 21a ist bezüglich seiner Axialerstreckung besonders kurz bauend ausgeführt. Dadurch, dass die Kupplungskontur 28a und die Verlagerungskontur 35 funktional entkoppelt sind, können diese in axialer Richtung überlappend zueinander angeordnet sein.

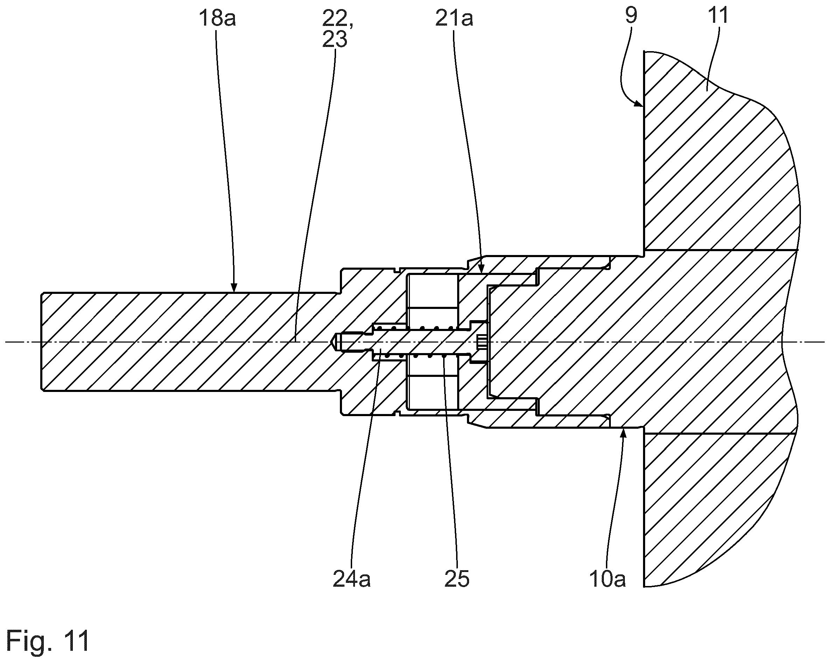

Die Funktionsweise der Kupplungsvorrichtung gemäß dem zweiten Ausführungsbeispiel entspricht der des ersten Ausführungsbeispiels. Im angekuppelten Zustand ragt das Kupplungselement 21a infolge der Federkraftbeaufschlagung durch das Federelement 25 an der Axialausnehmung 33a in dem Antriebselement 18a axial vor. Wenn das Zellenrad mit der Zellenradwelle 10a, insbesondere mit dem Steckzapfen, an dem die Kupplungsgegenkontur 29a ausgebildet ist, in das hülsenförmige Antriebselement 18a eingeführt wird, wird das Kupplungselement 21a in die Axialausnehmung 33a entgegen der Federkraft eingedrückt. Sobald die Drehposition der Kupplungskontur 28a und der Kupplungsgegenkontur 29a korrespondieren, wird das Kupplungselement 21a infolge der Federkraftbeaufschlagung axial auf den Steckzapfen mit der Kupplungsgegenkontur 29a aufgeschoben. Die Kupplungsvorrichtung befindet sich dann in der Kupplungsposition, die in Fig. 11 dargestellt ist.

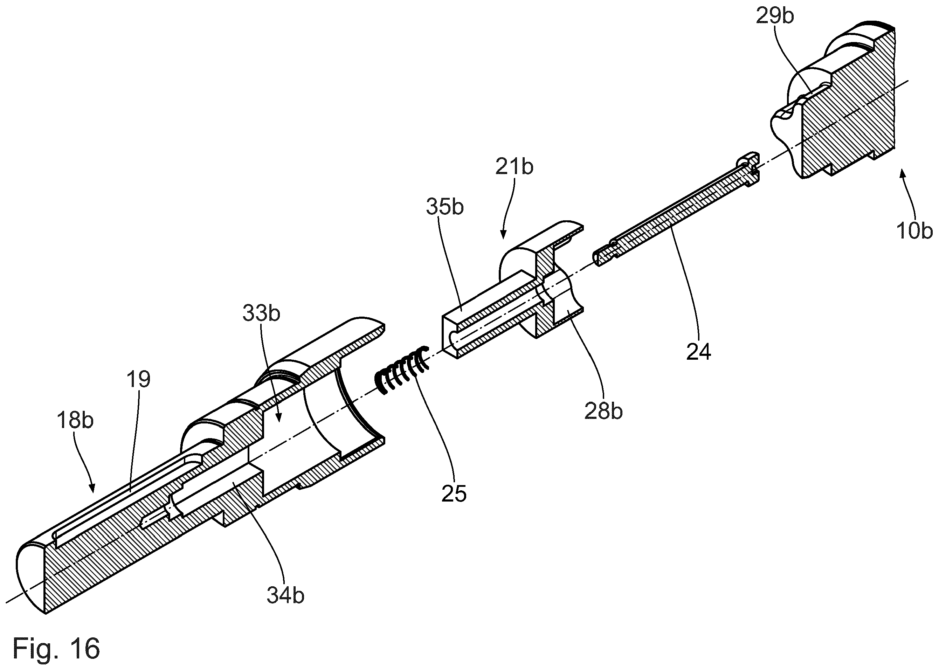

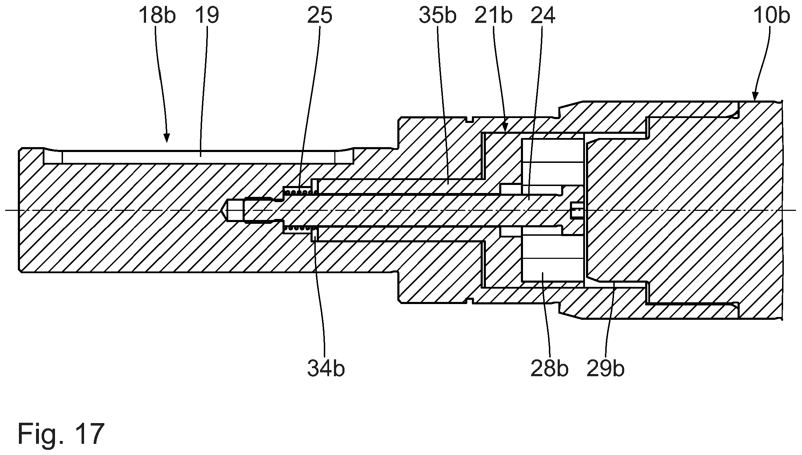

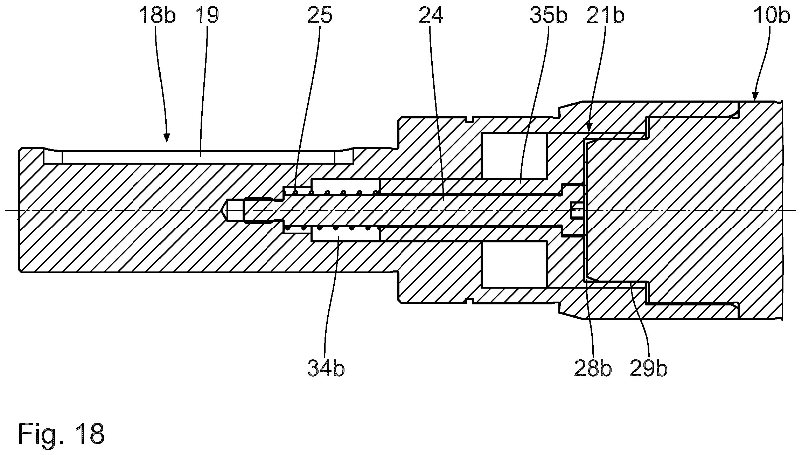

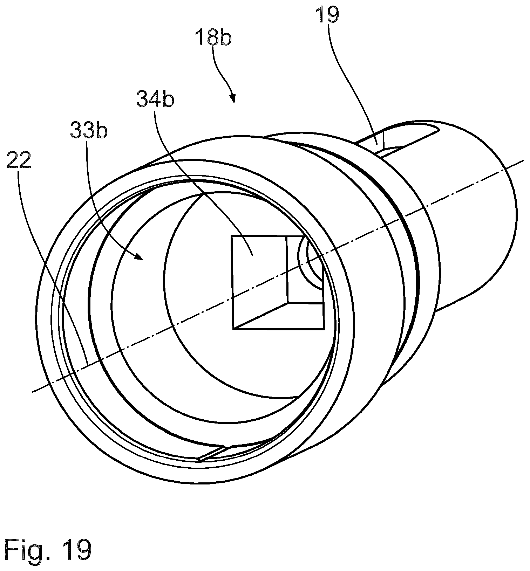

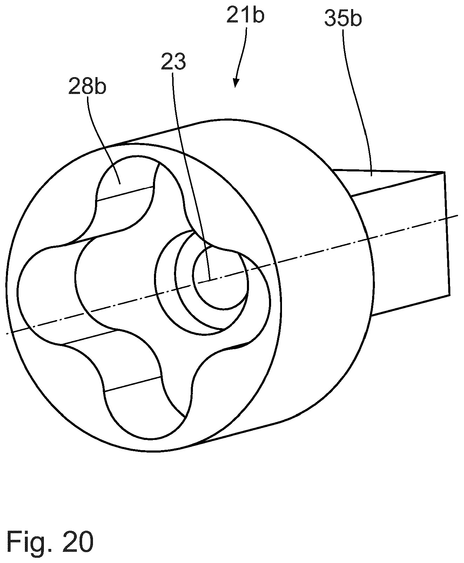

Im Folgenden wird unter Bezugnahme auf Fig. 16 bis 20 ein drittes Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Wie bei dem zweiten Ausführungsbeispiel ist das Kupplungselement 21b an dem Antriebselement 18b angeordnet und daran gehalten.

Die Verlagerungskontur 35b ist gemäß diesem Ausführungsbeispiel als Außen-Vierkantprofilfortsatz an dem Kupplungselement 21b ausgeführt. Die Verlagerungskontur 35b ist als Vierkant-Hohlprofil ausgeführt mit einer Innenbohrung als Durchgangsbohrung für die Passschraube 24.

Die Herstellung des Kupplungselements 21b ist vereinfacht. Insbesondere kann das Kupplungselement 21b in dem Bereich der Kupplungskontur 28b mit einer runden Außenkontur ausgeführt sein. Die Herstellung ist dadurch vereinfacht.

Die Vorgehensweise zum Kuppeln des Zellenrades 9 mit der Zellenradwelle 10b in dem Antriebselement 18b erfolgt analog dem zweiten Ausführungsbeispiel.

### Bezugszeichen

- 1 -: Zellenradschleuse
- 2 -: Gehäuse
- 3 -: Innenraum
- 4 -: Mittelachse
- 5 -: Einlassstutzen
- 6 -: Auslassstutzen
- 7 -: Seitendeckel
- 8 -: Seitendeckel
- 9 -: Zellenrad
- 10 -: Zellenradwelle
- 11 -: Flügel
- 12 -: Zelle
- 13 -: Lageröffnung
- 14 -: Lagergehäuse
- 15 -: Wälzlager
- 16 -: Dichtung
- 17 -: Spülluftanschluss
- 18 -: Antriebselement
- 19 -: Nut
- 20 -: erster Kupplungsabschnitt
- 21 -: Kupplungselement
- 22 -: Drehachse
- 23 -: Längsachse
- 24 -: Rückhalteelement
- 25 -: Federelement
- 26 -: Axialanlagefläche
- 27 -: Stirnfläche
- 28 -: Kupplungskontur
- 29 -: Kupplungsgegenkontur
- 30 -: Konvexer Umfangsabschnitt
- 31 -: Konkaver Umfangsabschnitt
- 32 -: Konkaver Umfangsgegenabschnitt
- 33 -: Axialausnehmung
- 34 -: Führungskontur
- 35 -: Verlagerungskontur
- 36 -: Anlageschulter
- 37 -: Anlagefläche

## Patentansprüche

1. Kupplungsvorrichtung für eine Zellenradschleuse (1), wobei die Kupplungsvorrichtung umfasst
a. ein um eine Drehachse (22) drehantreibbares Antriebselement (18; 18a; 18b),
b. eine mit dem Antriebselement (18; 18a; 18b) kuppelbare Zellenradwelle (10; 10a; 10b),
**gekennzeichnet durch**
c. ein separates Kupplungselement (21; 21a; 21b) zum drehpositionsunabhängigen Kuppeln des Antriebselements (18; 18a; 18b) mit der Zellenradwelle (10; 10a; 10b), wobei das Kupplungselement (21; 21a; 21b)
i. an dem Antriebselement (18a; 18b) oder an der Zellenradwelle (10) axial bezüglich der Drehachse (22) geführt verlagerbar angeordnet ist zwischen einer Kupplungsposition, in der das Antriebselement (18; 18a; 18b) und die Zellenradwelle (10; 10a; 10b) drehmomentübertragend bezüglich der Drehachse (22) miteinander verbunden sind, und einer Entkupplungsposition, in der das Antriebselement (18; 18a; 18b) und die Zellenradwelle (10; 10a; 10b) bezüglich einer Drehmomentübertragung entkuppelt sind,
ii. mittels eines Federelements (25) an dem Antriebselement (18a; 18b) oder an der Zellenradwelle (10) axial bezüglich der Drehachse (22) vorgespannt angeordnet ist,
iii. einen Kupplungsabschnitt aufweist, mittels dem das Kupplungselement (21; 21a; 21b) mit der Zellenradwelle (10a; 10b) oder mit dem Antriebselement (18) in der Kupplungsposition bezüglich der Drehachse (22) verdrehsicher gekuppelt ist.

2. Kupplungsvorrichtung gemäß Anspruch 1, **dadurch gekennzeichnet, dass** das Antriebselement (18a; 18b) oder die Zellenradwelle (10) einen Führungsabschnitt aufweist, der in einer senkrecht zur Drehachse (22) orientierten Ebene eine unrunde Führungskontur (34; 34a; 34b) aufweist, die mit einer Verlagerungskontur (35; 35b) des Kupplungselements (21; 21a; 21b) korrespondiert.

3. Kupplungsvorrichtung gemäß einem der vorstehenden Ansprüche, **dadurch gekennzeichnet, dass** das Antriebselement (18a; 18b) oder die Zellenradwelle (10) eine Axialausnehmung (33; 33a; 33b) aufweist, in der das Kupplungselement (21; 21a; 21b) in der Entkupplungsposition vollständig anordenbar ist.

4. Kupplungsvorrichtung gemäß Ansprüchen 2 und 3, **dadurch gekennzeichnet, dass** die Axialausnehmung (33; 33a; 33b) zumindest abschnittweise, insbesondere vollständig, die Führungskontur (34; 34a; 34b) aufweist.

5. Kupplungsvorrichtung gemäß Anspruch 3 oder 4, **dadurch gekennzeichnet, dass** das Kupplungselement (21; 21a; 21b) aufgrund der von dem Federelement (25) ausgeübten Federkraft axial an der Axialausnehmung (33; 33a; 33b) vorsteht.

6. Kupplungsvorrichtung gemäß einem der vorstehenden Ansprüche, **dadurch gekennzeichnet, dass** der Kupplungsabschnitt in einer senkrecht zur Drehachse (22) orientierten Ebene eine unrunde Kupplungskontur (28; 28a; 28b) aufweist, die mit einer Kupplungsgegenkontur (29; 29a; 29b) der Zellenradwelle (10a; 10b) oder des Antriebselements (18) korrespondiert.

7. Kupplungsvorrichtung gemäß einem der vorstehenden Ansprüche, **gekennzeichnet durch** ein Rückhalteelement (24), mit dem das Kupplungselement (21; 21a; 21b) an dem Antriebselement (18a; 18b) oder an der Zellenradwelle (10) gehalten ist.

8. Kupplungsvorrichtung gemäß Anspruch 7, **dadurch gekennzeichnet, dass** das Rückhalteelement (24) als Schraube, insbesondere als Passschraube, ausgeführt ist.

9. Zellenradschleuse mit
a. einem Gehäuse (2),
b. einem im Gehäuse (2) ausgebildeten Innenraum (3),
c. einem in den Innenraum (3) mündenden Einlass (5),
d. einem aus dem Innenraum (3) mündenden Auslass (6),
e. Stirnseiten des Innenraums (3) abschließenden Deckeln (7, 8),
f. einem im Innenraum (3) angeordneten Zellenrad (9) mit einer Zellenradwelle (10; 10a; 10b), wobei das Zellenrad (9) in den Deckeln (7, 8) drehbar gelagert ist,
g. einer einem Deckel (7) zugeordneten Drehantriebseinrichtung für das Zellenrad (9), wobei die Drehantriebseinrichtung ein Antriebselement (18; 18a; 18b) aufweist,
h. einer Kupplungsvorrichtung gemäß einem der vorstehenden Ansprüche.

## Claims

1. Coupling device for a cellular wheel sluice (1), the coupling device comprising
a. a drive element (18; 18a; 18b) which can be driven in rotation about an axis of rotation (22),
b. a cellular wheel shaft (10; 10a; 10b) which can be coupled to the drive element (18; 18a; 18b),
**characterised by**
c. a separate coupling element (21; 21a; 21b) for coupling the drive element (18; 18a; 18b) to the cellular wheel shaft (10; 10a; 10b) in a manner independent of the rotational position, the coupling element (21; 21a; 21b)
i. being arranged on the drive element (18a; 18b) or on the cellular wheel shaft (10) so as to be displaceable in a guided manner, axially with respect to the axis of rotation (22), between a coupling position, in which the drive element (18; 18a; 18b) and the cellular wheel shaft (10; 10a; 10b) are interconnected in a torque-transmitting manner with respect to the axis of rotation (22), and a decoupling position, in which the drive element (18; 18a; 18b) and the cellular wheel shaft (10; 10a; 10b) are decoupled in terms of torque transmission,
ii. being arranged so as to be axially biased with respect to the axis of rotation (22) by means of a spring element (25) on the drive element (18a; 18b) or on the cellular wheel shaft (10),
iii. having a coupling portion by means of which the coupling element (21; 21a; 21b) is coupled to the cellular wheel shaft (10a; 10b) or to the drive element (18) in the coupling position with respect to the axis of rotation (22) in a torque-proof manner.

2. Coupling device according to claim 1, **characterised in that** the drive element (18a; 18b) or the cellular wheel shaft (10) has a guide portion which has a non-circular guide contour (34; 34a; 34b), corresponding to a displacement contour (35; 35b) of the coupling element (21; 21a; 21b), in a plane perpendicular to the axis of rotation (22).

3. Coupling device according to any of the preceding claims, **characterised in that** the drive element (18a; 18b) or the cellular wheel shaft (10) has an axial recess (33; 33a; 33b), in which the coupling element (21; 21a; 21b) can be fully arranged in the decoupling position.

4. Coupling device according to claims 2 and 3, **characterised in that** the axial recess (33; 33a; 33b) has the guide contour (34; 34a; 34b) at least in portions, in particular in full.

5. Coupling device according to either claim 3 or claim 4, **characterised in that** the coupling element (21; 21a; 21b) protrudes axially at the axial recess (33; 33a; 33b) as a result of the spring force exerted by the spring element (25).

6. Coupling device according to any of the preceding claims, **characterised in that** the coupling portion has a non-circular coupling contour (28; 28a; 28b), corresponding to a coupling counter contour (29; 29a; 29b) of the cellular wheel shaft (10a; 10b) or of the drive element (18), in a plane perpendicular to the axis of rotation (22).

7. Coupling device according to any of the preceding claims, **characterised by** a retaining element (24) by means of which the coupling element (21; 21a; 21b) is held on the drive element (18a; 18b) or on the cellular wheel shaft (10).

8. Coupling device according to claim 7, **characterised in that** the retaining element (24) is configured as a screw, in particular as a fitting screw.

9. Cellular wheel sluice comprising
a. a housing (2),
b. an interior (3) formed in the housing (2),
c. an inlet (5) leading into the interior (3),
d. an outlet (6) leading out of the interior (3),
e. covers (7, 8) closing off end faces of the interior (3),
f. a cellular wheel (9) arranged in the interior (3) and having a cellular wheel shaft (10; 10a; 10b), the cellular wheel (9) being rotatably mounted in the covers (7, 8),
g. a rotary drive device, associated with a cover (7), for the cellular wheel (9), the rotary drive device having a drive element (18; 18a; 18b),
h. a coupling device according to any of the preceding claims.

## Revendications

1. Dispositif d'accouplement pour une vanne à roue cellulaire (1), ledit dispositif d'accouplement comprenant
a. un élément d'entraînement (18 ; 18a ; 18b) pouvant être entraîné en rotation autour d'un axe de rotation (22),
b. un arbre de roue cellulaire (10 ; 10a ; 10b) pouvant être accouplé à l'élément d'entraînement (18 ; 18a ; 18b),
**caractérisé par**
c. un élément d'accouplement séparé (21 ; 21a ; 21b) pour accoupler l'élément d'entraînement (18 ; 18a ; 18b) avec l'arbre de roue cellulaire (10 ; 10a ; 10b) indépendamment de la position de rotation, ledit l'élément d'accouplement (21 ; 21a ; 21b)
i. étant agencé par rapport à l'axe de rotation (22) sur l'élément d'entraînement (18a ; 18b) ou sur l'arbre de roue cellulaire (10) afin de pouvoir être déplacé de manière à être guidé axialement entre une position d'accouplement dans laquelle l'élément d'entraînement (18 ; 18a ; 18b) et l'arbre de roue cellulaire (10 ; 10a ; 10b) sont reliés l'un à l'autre en transmettant un couple par rapport à l'axe de rotation (22), et une position de désaccouplement dans laquelle l'élément d'entraînement (18 ; 18a ; 18b) et l'arbre de roue cellulaire (10 ; 10a ; 10b) sont désaccouplés par rapport à une transmission de couple ;
ii. étant positionnésur l'élément d'entraînement (18a ; 18b) ou sur l'arbre de roue cellulaire (10), en étant axialement précontraint, au moyen d'un élément à ressort (25), par rapport à l'axe de rotation (22) ;
iii. comportant une partie d'accouplement au moyen de laquelle l'élément d'accouplement (21 ; 21a ; 21b) est accouplé dans la position d'accouplement de manière bloquée en rotation par rapport à l'axe de rotation (22) avec l'arbre de roue cellulaire (10a ; 10b) ou avec l'élément d'entraînement (18).

2. Dispositif d'accouplement selon la revendication 1, **caractérisé en ce que** l'élément d'entraînement (18a ; 18b) ou l'arbre de roue cellulaire (10) comporte une partie de guidage qui, dans un plan orienté perpendiculairement à l'axe de rotation (22), présente un contour de guidage non circulaire (34 ; 34a ; 34b) qui correspond à un contour de déplacement (35 ; 35b) de l'élément d'accouplement (21 ; 21a ; 21b).

3. Dispositif d'accouplement selon l'une des revendications précédentes, **caractérisé en ce que** l'élément d'entraînement (18a ; 18b) ou l'arbre de roue cellulaire (10) comporte un évidement axial (33 ; 33a ; 33b) dans lequel l'élément d'accouplement (21 ; 21a ; 21b) peut être entièrement agencé dans la position de désaccouplement.

4. Dispositif d'accouplement selon les revendications 2 et 3, **caractérisé en ce que** l'évidement axial (33 ; 33a ; 33b) présente, au moins par sections, en particulier en totalité, le contour de guidage (34 ; 34a ; 34b).

5. Dispositif d'accouplement selon la revendication 3 ou 4, **caractérisé en ce que** l'élément d'accouplement (21 ; 21a ; 21b) fait saillie axialement sur l'évidement axial (33 ; 33a ; 33b) en raison de la force élastique exercée par l'élément à ressort (25).

6. Dispositif d'accouplement selon l'une des revendications précédentes, **caractérisé en ce que** la partie d'accouplement présente, dans un plan orienté perpendiculairement à l'axe de rotation (22), un contour d'accouplement non circulaire (29 ; 29a ; 29b) qui correspond à un contour d'accouplement complémentaire (29 ; 29a ; 29b) de l'arbre de roue cellulaire (10a ; 10b) ou de l'élément d'entraînement (18).

7. Dispositif d'accouplement selon l'une des revendications précédentes, **caractérisé par** un élément de retenue (24) avec lequel l'élément d'accouplement (21 ; 21a ; 21b) est maintenu sur l'élément d'entraînement (18a; 18b) ou sur l'arbre de roue cellulaire (10).

8. Dispositif d'accouplement selon la revendication 7, **caractérisé en ce que** l'élément de retenue (24) est réalisé sous la forme d'une vis, en particulier d'une vis de fixation.

9. Vanne à roue cellulaire comprenant
a. un boîtier (2),
b. un espace intérieur (3) formé dans le boîtier (2),
c. une entrée (5) débouchant dans l'espace intérieur (3),
d. une sortie (6) débouchant de l'espace intérieur (3),
e. des couvercles (7, 8) fermant des faces d'extrémité de l'espace intérieur (3),
f. une roue cellulaire (9) agencée dans l'espace intérieur (3) et comportant un arbre de roue cellulaire (10 ; 10a ; 10b), dans lequel la roue cellulaire (9) est montée de manière rotative dans les couvercles (7, 8),
g. un dispositif d'entraînement en rotation pour la roue cellulaire (9), associé à un couvercle (7), le dispositif d'entraînement en rotation comprenant un élément d'entraînement (18 ; 18a ; 18b),
h. un dispositif d'accouplement selon l'une des revendications précédentes.
